# FASCICULE DE BREVET EUROPEEN

(11) **EP 2 716 188 B1**
(45) Date de publication et mention de la délivrance du brevet: **19.10.2016**
(21) Numéro de dépôt: 13182672.9
(22) Date de dépôt: 02.09.2013
(51) Int. Cl.: A47J 27/08

(54) **Appareil de cuisson d'aliments sous pression a couvercle allege**
Druckkochgerät für Lebensmittel mit leichterem Deckel
Appliance for cooking food under pressure with a lightened lid

(30) Priorité: 03.09.2012 FR 1258204
(43) Date de publication de la demande: 09.04.2014
(73) Titulaire: SEB S.A., 69130 Ecully (FR)
(72) Inventeur: Chaillard, Hubert, Roger, Bernard, 52250 LONGEAU PERCEY (FR); Blanc, Hervé, Eugène, René, 21000 DIJON (FR); Anota, Daniel, Jean, Marie, 21000 DIJON (FR); Chameroy, Eric, 21260 VERONNES (FR)
(74) Mandataire: Martin, Didier Roland Valéry

(56) Documents cités:
- US-A- 4 627 417
- US-A- 5 293 813

## Description

La présente invention se rapporte au domaine technique général des appareils de cuisson d'aliments sous pression, notamment à usage domestique, comportant au moins une cuve et un couvercle destinés à être rapportés sur la cuve pour former une enceinte de cuisson étanche, lesdits appareils étant conçus pour assurer, en toute sécurité, la cuisson sous pression des aliments contenus dans la cuve.

La présente invention concerne plus particulièrement un appareil de cuisson d'aliments sous pression comportant au moins :
- une cuve pourvue d'un rebord supérieur,
- un couvercle destiné à être rapporté sur la cuve pour former une enceinte de cuisson étanche,
- au moins une mâchoire de verrouillage montée mobile sur le couvercle entre une position de verrouillage du couvercle sur la cuve et une position de déverrouillage dans laquelle le couvercle peut être retiré de la cuve, ladite au moins une mâchoire présentant une section transversale en U définissant une âme centrale avec une aile supérieure située au-dessus du couvercle et une aile inférieure destinée à venir engager le rebord supérieur de la cuve en position de verrouillage.

On connaît déjà des appareils de cuisson d'aliments sous pression, notamment à usage domestique, tels des autocuiseurs qui sont pourvus de mâchoires de verrouillage en U permettant d'assurer un verrouillage du couvercle sur la cuve, les mâchoires venant enserrer le bord supérieur de la cuve en position de verrouillage par l'intermédiaire de leur l'aile inférieure qui vient engager le rebord supérieur de la cuve. Les dispositifs connus de ce type donnent généralement satisfaction et procurent une bonne sécurité au verrouillage de l'appareil en cas de surpression ou d'anomalie de fonctionnement.

Le document US4627417 décrit un appareil de cuisson comprenant les caractéristiques techniques du préambule de la revendication 1.

Les appareils connus souffrent néanmoins de divers inconvénients liés en particulier à l'absence de maîtrise complète des efforts de réaction survenant lorsque l'autocuiseur est amené à fonctionner en surpression. Les efforts mis en jeu sont en effet complexes et les innombrables recompositions des forces susceptibles d'intervenir dans de telles situations compliquent fortement la maîtrise des efforts de réaction.

Pour éviter tout risque de déformation excessive en cas de surpression, les épaisseurs des pièces mises en jeu, cuve, mâchoire et couvercle, sont par conséquent systématiquement supérieurs aux épaisseurs normalement requises ce qui induit à la fois un surcoût économique inutile et un poids des appareils également inutilement élevé.

Il existe par conséquent un besoin dans le domaine visant à mieux maîtriser les différents efforts intervenant dans les appareils de cuisson sous pression d'aliments lorsqu'ils sont amenés à fonctionner dans des conditions anormales de pression à la suite d'incidents de fonctionnement.

Les objets assignés à l'invention visent par conséquent à porter remède aux différents inconvénients énumérés précédemment et à proposer un nouvel appareil de cuisson d'aliments sous pression dans lequel les efforts de réaction en cas de surpression sont parfaitement maîtrisés, les déformations limitées et le poids du couvercle réduit.

Un autre objet de l'invention vise à proposer un nouvel appareil de cuisson qui tout en étant d'une résistance optimale aux déformations, est d'une conception et d'une conformation particulièrement simplifiée.

Un autre objet de l'invention vise à proposer un nouvel appareil de cuisson dont les efforts de déformation en cas de surpression sont optimisés.

Les objets assignés à l'invention sont également atteints à l'aide d'un appareil de cuisson d'aliments sous pression comportant les caractéristiques techniques de la revendication 1.

D'autres particularités et avantages de l'invention apparaîtront et ressortiront plus en détail à la lecture de la description faite ci-après, en référence aux dessins annexés, donnés à titre purement illustratifs et non limitatifs, dans lesquels :
- La figure 1 illustre, selon une vue en perspective, un couvercle d'autocuiseur destiné à être rapporté sur une cuve pour former un appareil de cuisson d'aliments sous pression selon l'invention.
- La figure 2 illustre, selon une vue en coupe transversale partielle un appareil de cuisson d'aliments sous pression conforme à l'invention dans lequel la mâchoire de verrouillage est en position de déverrouillage.
- La figure 3 illustre, selon une vue en coupe transversale partielle similaire à la figure 2, une mâchoire de verrouillage d'un appareil de cuisson d'aliments sous pression conforme à l'invention dans une position de verrouillage et montrant l'alignement des efforts de réaction en cas de pression dans l'appareil.

L'appareil de cuisson d'aliments sous pression conforme à l'invention est constitué par un autocuiseur de préférence à usage domestique, comportant tel qu'illustré aux figures, au moins :
- une cuve 2 pourvue d'un rebord supérieur 3,
- un couvercle 4 destiné à être rapporté sur la cuve 2 pour former une enceinte de cuisson étanche.

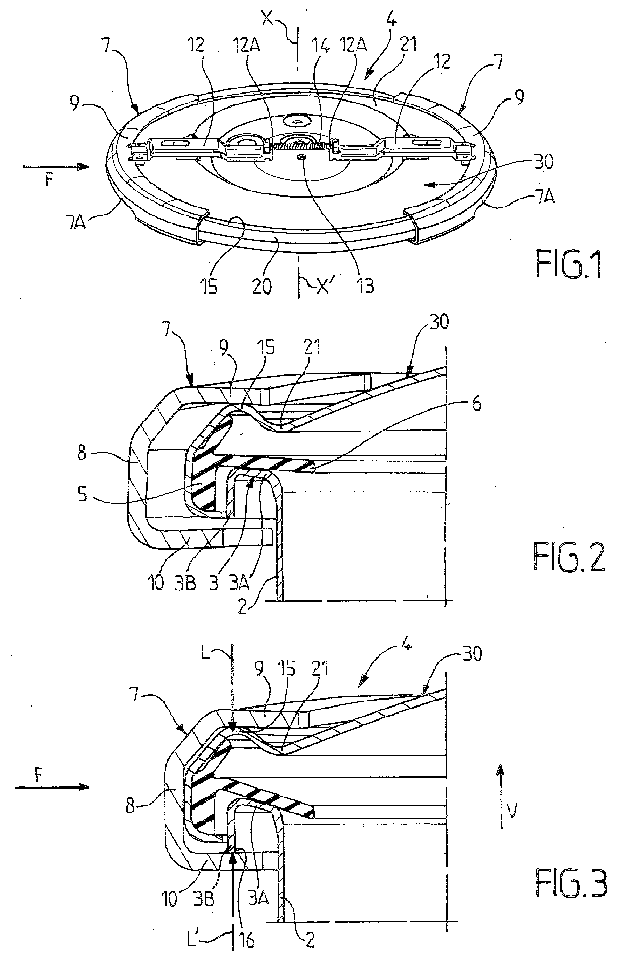

Tel qu'illustré aux figures, l'obtention d'une enceinte de cuisson étanche est obtenue par l'interposition d'un joint 5, par exemple en élastomère, de forme annulaire et par exemple pourvu d'au moins une lèvre médiane 6 de telle sorte que le joint 5 peut venir reposer contre le bord supérieur 3 et réaliser l'étanchéité entre le couvercle 4 et la cuve 2. Des formes et caractéristiques géométriques du joint 5, autres que celles représentées à titre purement illustratifs aux figures 2 et 3, peuvent bien évidemment être envisagées sans sortir du cadre de l'invention.

A titre purement illustratif, l'appareil de cuisson d'aliments sous pression conforme à l'invention comporte une cuve 2 de forme sensiblement cylindrique ainsi qu'un couvercle 4 de forme sensiblement circulaire, étant entendu qu'à titre de variante la cuve 2 et le couvercle 4 peuvent être de toutes formes géométriques différentes, et par exemple ovale notamment, sans sortir du cadre de l'invention.

La cuve 2 et l'ossature principale du couvercle 4 formée par un disque 30 de fermeture sont réalisées de manière connue à partir d'un matériau métallique, tel que l'acier inoxydable, la cuve 2 comportant un fond (non représenté) apte à diffuser la chaleur.

L'appareil de cuisson d'aliments sous pression comporte également un dispositif de verrouillage / déverrouillage du couvercle sur la cuve permettant à l'utilisateur de retirer le couvercle 4 pour avoir accès à l'intérieur de la cuve et de le refermer.

A cet effet, l'appareil de cuisson d'aliments sous pression comporte également au moins une mâchoire de verrouillage 7 montée mobile sur le couvercle 4, et notamment sur le disque 30, entre une position de verrouillage du couvercle 4 (figure 3) sur la cuve 2 et une position de déverrouillage (figure 2) dans laquelle le couvercle 4 peut être retiré de la cuve 2, ladite au moins une mâchoire 7 présentant une section transversale en U définissant une âme centrale 8 avec une aile supérieure 9 située au-dessus du couvercle 4 et une aile inférieure 10 destinée à venir engager le rebord supérieur 3 de la cuve 2 en position de verrouillage.

Tel qu'illustré aux figures, en particulier à la figure 1, le dispositif de verrouillage / déverrouillage comporte au moins une mâchoire 7 de verrouillage montée mobile radialement et de préférence deux mâchoires 7 montées mobiles radialement sur le couvercle en position diamétralement opposée en regard de l'axe de symétrie XX' du couvercle 4 de l'autocuiseur.

A titre de variante, et sans sortir du cadre de l'invention, l'appareil de cuisson d'aliments sous pression conforme à l'invention peut bien évidemment comporter une seule et unique mâchoire de verrouillage 7 ou au contraire un nombre supérieur de mâchoires de verrouillage 7 réparties angulairement, de préférence régulièrement, sur le périmètre du couvercle 4, et par exemple deux mâchoires de verrouillage 7 telles que mentionnées précédemment, ou trois mâchoires de verrouillage, ou encore quatre mâchoires de verrouillage, voire plus.

De manière bien connue, la ou les mâchoires de verrouillage 7 sont réalisées sous la forme d'une plaque métallique profilée en U telle qu'indiquée précédemment en forme d'arc de cercle ou de segment de manière à pouvoir venir enserrer le rebord supérieur 3 de la cuve 2 lorsque la ou les mâchoires 7 sont en position de verrouillage. Selon l'invention, la ou les mâchoires de verrouillage 7 comportent une aile supérieure 9 et une aile inférieure 10 unique qui s'étendent sur la totalité de la longueur du segment de mâchoire. Tel qu'illustré, la mâchoire de verrouillage 7 peut comporter une découpe 7A dans son âme 8 et dans l'aile inférieure 10 de telle sorte que cette dernière est formée de deux demi ailes 10. A titre de variante complémentaire, l'aile supérieure 9 peut également comporter une découpe centrale et être composée de deux demi ailes supérieures 10 (non représentées).

Telle qu'illustrée à titre de variante préférentielle, lorsque l'appareil de cuisson d'aliments sous pression conforme à l'invention comporte une paire de mâchoires 7 montées en position diamétralement opposée sur le couvercle 4, un dispositif de commande de déplacement des mâchoires (non représenté) est prévu.

Il peut comporter, tel que cela est illustré de manière schématique à la figure 1, deux bras entraîneurs 12 s'étendant radialement vers le centre du couvercle 13 à partir de la partie centrale de l'aile supérieure 9 de chaque mâchoire de verrouillage 7, lesdits bras entraîneurs 12 étant reliés à un organe de commande manuel, pommeau ou autre non représenté aux figures..

La position de rappel de chacune des mâchoires de verrouillage 7 est réalisée par l'interposition d'un élément élastique de rappel tel qu'un ou plusieurs ressort(s) hélicoïdal ou hélicoïdaux 14 interposé(s) entre les extrémités libres 12A de chacun des bras entraîneurs 12. On obtient de cette façon un rappel élastique de chacune des mâchoires de verrouillage 7 vers leurs positions de verrouillage.

Au sens de l'invention, et par commodité, on distinguera la direction radiale interne correspondant à une direction ou un sens radial dirigé vers l'axe central X-X' de l'appareil, et par exemple vers le centre 13 du couvercle 4, et la direction radiale externe dirigée vers l'extérieur de l'appareil, c'est-à-dire en éloignement de son centre 13.

Selon l'invention et de manière générale, ladite au moins une mâchoire de verrouillage 7 est montée mobile radialement par un dispositif de commande comprenant un bras entraîneur 12 s'étendant radialement vers le centre du couvercle 13 à partir de l'aile supérieure 9, et un organe de commande relié audit bras entraîneur 12.

Selon une caractéristique importante de l'invention, le couvercle 4, est pourvu d'une conformation 15 permettant une zone de contact entre le couvercle 4 et l'aile supérieure 9 de la mâchoire de verrouillage 7, dite *« première zone de contact* ». Simultanément, l'aile inférieure 10 de la mâchoire de verrouillage 7 et le rebord supérieur 3 de la cuve 2 sont dimensionnés et conformés pour permettre une autre zone de contact respectif, dite « *seconde zone de contact »* entre ces deux pièces, savoir l'aile inférieure 10 et le rebord supérieur 3, ladite seconde zone de contact étant située sensiblement à l'aplomb de la première zone de contact lorsque ladite au moins une mâchoire de verrouillage 7 est en position de verrouillage (figure 3).

Cette disposition géométrique des deux zones de contact situées à l'aplomb l'une de l'autre permet que la résultante des efforts sur l'aile supérieure de la mâchoire soit alignée avec la résultante des efforts sur l'aile inférieure lorsque l'appareil est en pression.

Ainsi, selon l'invention, la conformation particulière du couvercle 4 ainsi que le dimensionnement approprié de chaque mâchoire de verrouillage 7, permet d'obtenir, lorsque les mâchoires de verrouillage 7 sont en position de verrouillage, deux zones de contact qui sont alignées verticalement selon un axe L-L' lequel est sensiblement parallèle à l'axe X-X' ce qui permet d'aligner selon cet axe L-L', les efforts de réaction survenant au sein de l'autocuiseur et dans les mâchoires lorsque l'autocuiseur est en pression.

Cette particularité constructive qui permet ainsi d'aligner le contact de l'aile supérieur 9 de la mâchoire 7 selon un axe directement aligné avec le contact de l'aile inférieur 10 de la mâchoire 7 avec le rebord supérieur 3 évite ainsi d'engendrer des couples parasites de contraintes puisque l'ensemble des contraintes susceptibles de survenir est dirigé selon l'axe L-L' des première et seconde zones de contact.

Selon la variante préférentielle illustrée, le couvercle 4 étant circulaire, la première zone de contact forme un arc de cercle s'étendant sur toute la longueur de l'aile supérieure 9 et la seconde zone de contact est composée de deux arcs de cercle délimités par la longueur des deux segments formés par les deux demi ailes inférieures 10.

La création de deux zones de contact superposées conduit à une disposition constructive qui permet également d'une part de renforcer la périphérie du couvercle 4 alors que cette zone est généralement sollicitée pour contenir l'effort de pression et d'autre part de limiter les déformations du couvercle 4 entre les mâchoires 7.

Cette disposition constructive permet finalement d'optimiser la quantité de métal à mettre en oeuvre dans la réalisation de l'autocuiseur et en particulier de réduire l'épaisseur du couvercle 4 sans pour autant réduire sa résistance intrinsèque à la déformation.

De manière préférentielle, la première zone de contact et la seconde zone de contact forment des contacts linéaires ou sensiblement linéaires.

Tel qu'illustré aux figures, la conformation 15 est avantageusement formée par un bossage du couvercle 4, lequel permet sa mise en contact linéaire avec la surface inférieure de l'aile supérieure 9 du couvercle 4. En pratique, la conformation 15 est obtenue par déformation du disque 30 sur tout son périmètre pour former une déformation circulaire formant le bossage dont la face convexe est dirigée vers l'extérieur du couvercle 4 et du disque 30.

Tel qu'illustré aux figures, le bossage 15 s'étend sur tout le périmètre du couvercle 4 et à distance de son bord extérieur 20, mais proche de ce dernier de manière à pouvoir être recouvert par la mâchoire 7.

Tel qu'illustré également, le couvercle 4 comporte un contre bossage 21 adjacent au bossage 15 et situé dans la zone s'étendant entre le bossage 15 le centre 13 du couvercle 4 en considération de la direction radiale interne.

Tel qu'illustré, le contre bossage 21 forme une dépression circulaire s'étendant sur la totalité du périmètre du couvercle 4 autour de son centre 13.

De manière particulièrement avantageuse, et à titre de variante préférentielle, le bord supérieur 3 est conformé de manière à être pourvu d'un bord radial 3A s'étendant radialement à partir de la paroi de la cuve 2, ledit bord radial 3A se terminant par un bord tombé 3B dont la tranche terminale est destinée à être engagée par l'aile inférieure 10 lorsque ladite au moins une mâchoire 7 est en position de verrouillage pour former le second contact linéaire situé à la verticale du premier contact linéaire 15.

D'une manière générale, l'invention permet de diminuer l'épaisseur du couvercle 4 sans diminuer sa résistance en comparaison avec les couvercles des autocuiseurs connus. Ainsi, le couvercle 4 et la cuve 2 étant réalisés en inox, de même que les mâchoires 7, le couvercle 4 présentant une épaisseur inférieure à 1,2 mm, cette dernière valeur étant l'épaisseur classique des couvercles de l'art antérieur. De manière particulièrement avantageuse, l'épaisseur du couvercle est de l'ordre de 1 mm.

Le fonctionnement de l'appareil de cuisson d'aliments sous pression conforme à l'invention est le suivant.

Après avoir introduit les aliments et la quantité d'eau nécessaire à leur cuisson dans la cuve 2, l'utilisateur rapporte le couvercle 4 sur la cuve 2 de manière à assurer la fermeture de l'appareil. Le couvercle 4 est alors dans la position illustrée à la figure 2, situation dans laquelle aucune pression ne règne dans l'appareil de telle sorte qu'il peut exister un léger jeu entre la tranche terminale du bord tombé 3B et l'aile inférieure 10. L'utilisateur relâche alors le dispositif de verrouillage / déverrouillage de telle sorte que la ou les mâchoires 7 viennent occuper leur position de verrouillage illustrée à la figure 3 en effectuant un mouvement radial interne selon la direction F de manière à venir occuper leur position de verrouillage (figure 3), position dans laquelle elles viennent enserrer le couvercle 4, l'aile inférieure 10 venant se positionner sous la tranche terminale du rebord supérieur 3.

Dans cette position, le second contact linéaire n'est pas encore réalisé. Sous l'effet de la pression interne qui s'élève progressivement dans l'enceinte de cuisson, le couvercle 4 est soumis à une pression verticale s'exerçant selon la direction V de telle sorte que l'aile inférieure 10 vient en contact actif avec la tranche terminale du bord tombé 3B et réalise ainsi le second contact linéaire situé au droit du premier contact linéaire.

On obtient de cette façon et en cours de fonctionnement, un alignement complet des efforts de réaction dus à la pression régnant au sein de l'appareil de cuisson d'aliments sous pression conforme à l'invention.

## Revendications

1. Appareil de cuisson d'aliments sous pression comportant au moins :
- une cuve (2) pourvue d'un rebord supérieur (3),
- un couvercle (4) destiné à être rapporté sur la cuve (2) pour former une enceinte de cuisson étanche,
- au moins une mâchoire de verrouillage (7) montée mobile sur le couvercle (4) entre une position de verrouillage du couvercle (4) sur la cuve (2) et une position de déverrouillage dans laquelle le couvercle (4) peut être retiré de la cuve (2), ladite au moins une mâchoire (7) présentant une section transversale en U définissant une âme centrale (8) avec une aile supérieure (9) située au-dessus du couvercle (4) et une aile inférieure (10) destinée à venir engager le rebord supérieur (3) de la cuve (2) en position de verrouillage, le couvercle (4) étant pourvu d'une conformation (15) permettant une première zone de contact entre le couvercle (4) et l'aile supérieure (9) de la mâchoire (7),
**caractérisé en ce que**
- ladite au moins une mâchoire (7) est montée mobile radialement par un dispositif de commande comprenant un bras entraîneur (12) s'étendant radialement vers le centre du couvercle (13) à partir de l'aile supérieure (9), et un organe de commande relié audit bras entraîneur (12).
- et **en ce que** l'aile inférieure (10) de la mâchoire (7) et le rebord supérieur (3) de la cuve (2) sont dimensionnés et conformés pour permettre une seconde zone de contact respectif entre ces deux pièces, ladite seconde zone de contact étant située sensiblement à l'aplomb de la première zone de contact lorsque ladite au moins une mâchoire (7) est en position de verrouillage afin d'obtenir un alignement complet des efforts de réaction à la pression régnant au sein de l'appareil en cours de fonctionnement.

2. Appareil de cuisson selon la revendication 1 **caractérisé en ce que** la première zone de contact et la seconde zone de contact forment des contacts linéaires.

3. Appareil de cuisson selon la revendication 1 ou 2 **caractérisé en ce que** la conformation (15) est formée par un bossage du couvercle (4).

4. Appareil de cuisson selon la revendication 3 **caractérisé en ce que** le bossage s'étend sur tout le périmètre du couvercle (4) et à distance de son bord extérieur (20).

5. Appareil de cuisson selon l'une des revendications 3 à 4 **caractérisé en ce que** le couvercle (4) comporte un contre bossage (21) adjacent au bossage (15) et situé dans la zone s'étendant entre le bossage (15) le centre 13 du couvercle,

6. Appareil de cuisson selon l'une des revendications 1 à 5 **caractérisé en ce que** le rebord supérieur (3) est pourvu d'un bord radial (3A) s'étendant à partir de la paroi de la cuve (2), ledit bord radial (3A) se terminant par un bord tombé (3B) dont la tranche terminale est destinée à être engagée par l'aile inférieure (10) lorsque la dite au moins une mâchoire (7) est en position de verrouillage pour former le second contact linéaire (16) situé à la verticale du premier contact linéaire (15).

7. Appareil de cuisson selon l'une des revendications précédentes **caractérisé en ce qu'**il comporte deux mâchoires de verrouillages (7) montées diamétralement opposées sur le couvercle (4).

8. Appareil de cuisson selon l'une des revendications précédentes **caractérisé en ce que** le couvercle (4) et la cuve (2) sont réalisés en inox, le couvercle présentant une épaisseur inférieure à 1,2 mm.

9. Appareil de cuisson selon la revendication 7 **caractérisé en ce que** l'épaisseur du couvercle est de l'ordre de 1 mm.

10. Appareil de cuisson selon l'une des revendications précédentes **caractérisé en ce qu'**il est formé par un autocuiseur.

## Patentansprüche

1. Druckkochgerät für Lebensmittel, umfassend mindestens:
- einen Behälter (2), der mit einem oberen Rand (3) versehen ist,
- einen Deckel (4), der dazu bestimmt ist, auf den Behälter (2) aufgesetzt zu werden, um einen dichten Kochraum zu bilden,
- mindestens eine Verriegelungsspannbacke (7), die beweglich auf dem Deckel (4) zwischen einer Verriegelungsposition des Deckels (2) auf dem Behälter (2) und einer Entriegelungsposition, in der der Deckel (4) vom Behälter (2) abgenommen werden kann, montiert ist, wobei die mindestens eine Spannbacke (7) einen U-förmigen Querschnitt aufweist, der einen zentralen Kern (8) mit einem oberen Flügel (9), der sich über dem Deckel (4) befindet, und einem unteren Flügel (10), der dazu bestimmt ist, den oberen Rand (3) des Behälters (2) in Verriegelungsposition einzuspannen, definiert, wobei der Deckel (4) mit einer Formation (15) versehen ist, die eine erste Kontaktzone zwischen dem Deckel (4) und dem oberen Flügel (9) der Spannbacke (7) ermöglicht,
**dadurch gekennzeichnet, dass**
- die mindestens eine Spannbacke (7) radial beweglich durch eine Steuervorrichtung montiert ist, die einen Antriebsarm (12), der sich radial zur Mitte des Deckels (13) vom oberen Flügel (9) aus erstreckt, und ein Steuerelement umfasst, das mit dem Antriebsarm (12) verbunden ist,
- und dass der untere Flügel (10) der Spannbacke (7) und der obere Rand (3) des Behälters (2) dimensioniert und ausgebildet sind, um eine jeweilige zweite Kontaktzone zwischen diesen beiden Teilen zu ermöglichen, wobei die zweite Kontaktzone im Wesentlichen lotrecht auf die erste Kontaktzone ist, wenn die mindestens eine Spannbacke (7) in Verriegelungsposition ist, um eine vollständige Ausrichtung der Reaktionskräfte auf den in dem Gerät während des Betriebs herrschenden Druck zu erhalten.

2. Kochgerät nach Anspruch 1, **dadurch gekennzeichnet, dass** die erste Kontaktzone und die zweite Kontaktzone lineare Kontakte bilden.

3. Kochgerät nach Anspruch 1 oder 2, **dadurch gekennzeichnet, dass** die Formation (15) von einem Wulst des Deckels (4) gebildet wird.

4. Kochgerät nach Anspruch 3, **dadurch gekennzeichnet, dass** sich der Wulst über den gesamten Umfang des Deckels (4) und in einem Abstand zu seinem Außenrand (20) erstreckt.

5. Kochgerät nach einem der Ansprüche 3 bis 4, **dadurch gekennzeichnet, dass** der Deckel (4) einen Gegenwulst (21) umfasst, der an den Wulst (15) angrenzt und sich in der Zone befindet, die sich zwischen dem Wulst (15) und der Mitte 13 des Deckels erstreckt.

6. Kochgerät nach einem der Ansprüche 1 bis 5, **dadurch gekennzeichnet, dass** der obere Rand (3) mit einem radialen Rand (3A) versehen ist, der sich von der Wand des Behälters (2) aus erstreckt, wobei der radiale Rand (3A) mit einem Randflansch (3B) endet, dessen Endabschnitt dazu bestimmt ist, mit dem unteren Flügel (10) in Eingriff zu sein, wenn sich die mindestens eine Spannbacke (7) in Verriegelungsposition befindet, um den zweiten linearen Kontakt (16) zu bilden, der sich in der Vertikalen des ersten linearen Kontakts (15) befindet.

7. Kochgerät nach einem der vorhergehenden Ansprüche, **dadurch gekennzeichnet, dass** es zwei Verriegelungsspannbacken (7) umfasst, die diametral entgegengesetzt auf dem Deckel (4) montiert sind.

8. Kochgerät nach einem der vorhergehenden Ansprüche, **dadurch gekennzeichnet, dass** der Deckel (4) und der Behälter (2) aus rostfreiem Stahl hergestellt sind, wobei der Deckel eine Dicke unter 1,2 mm aufweist.

9. Kochgerät nach Anspruch 7, **dadurch gekennzeichnet, dass** die Dicke des Deckels ungefähr 1 mm beträgt.

10. Kochgerät nach einem der vorhergehenden Ansprüche, **dadurch gekennzeichnet, dass** es von einem Schnellkochtopf gebildet wird.

## Claims

1. A food pressure-cooking appliance including at least:
- a bowl (2) provided with an upper edge (3),a lid (4) intended to be applied on the bowl (2) to form a tight cooking chamber,
- at least one locking jaw (7) movably mounted on the lid (4) between a locking position of the lid (4) on the bowl (2) and an unlocking position in which the lid (4) can be removed from the bowl (2), said at least one jaw (7) having a U-shaped cross-section defining a central core (8) with an upper wing (9) located above the lid (4) and a lower wing (10) intended to come into engagement with the upper edge (3) of the bowl (2) in the locking position, the lid (4) being provided with a conformation (15) allowing a first contact area between the lid (4) and the upper wing (9) of the jaw (7),
**characterized in that**
- said at least one jaw (7) is mounted radially movable by a jaw displacement controlling device comprising a driving arm (12) extending radially toward the center (13) of the lid from the upper wing (9), and a control member connected to said driving arm (12),
- and **in that** the lower wing (10) of the jaw (7) and the upper edge (3) of the bowl (2) are sized and conformed so as to allow a second area of respective contact between these two parts, said second contact area being located substantially right above the first contact area when said at least one jaw (7) is in the locking position in order to obtain a complete alignment of the reaction stresses due to the pressure existing inside the food pressure-cooking appliance during the operation.

2. The cooking appliance according to claim 1, **characterized in that** the first contact area and the second contact area form linear contacts.

3. The cooking appliance according to claim 1 or 2, **characterized in that** the conformation (15) is formed by a boss on the lid (4).

4. The cooking appliance according to claim 3, **characterized in that** the boss extends over the whole perimeter of the lid (4) and remote from the external edge (20) thereof.

5. The cooking appliance according to one of claims 3 to 4, **characterized in that** the lid (4) includes a counter-boss (21), adjacent to the boss (15) and located in the area extending between the boss (15) and the center (13) of the lid.

6. The cooking appliance according to one of claims 1 to 5, **characterized in that** the upper edge (3) is provided with a radial edge (3A) extending from the wall of the bowl (2), said radial edge (3A) ending by a stretch flange (3B), the terminal rim of which is intended to be engaged by the lower wing (10) when said at least one jaw (7) is in the locking position, to form the second linear contact (16) located at the vertical of the first linear contact (15).

7. The cooking appliance according to one of the preceding claims, **characterized in that** it includes two locking jaws (7) mounted diametrically opposed on the lid (4).

8. The cooking appliance according to one of the preceding claims, **characterized in that** the lid (4) and the bow (2) are made of stainless steel, the lid having a thickness lower than 1.2 mm.

9. The cooking appliance according to claim 7, **characterized in that** the thickness of the lid is of the order of 1 mm.

10. The cooking appliance according to one of the preceding claims, **characterized in that** it is formed by a pressure-cooker.
